# DEMANDE DE BREVET EUROPEEN

(11) **EP 1 156 355 A1**
(43) Date de publication de la demande: **21.11.2001**
(21) Numéro de dépôt: 01380002.4
(22) Date de dépôt: 15.05.2001
(51) Int. Cl.: G02B 27/22

(54) **Dispositif pliant, autogenerateur constant, lors de son deploiement de plan bissecteur, par deformation non permanente d'une partie de celui-ci, pour vision stereoscopique mono-miroir**

(30) Priorité: 16.05.2000 FR 0006185
(71) Demandeur: Bennejean, Jacques, 87000 Limoges (FR)
(72) Inventeur: Bennejean, Jacques, 87000 Limoges (FR)

(57) **Abrégé**

Ce dispositif se déplie en gardant un panneau (6) support d'un miroir (8) dans le plan bissecteur du plan-dièdre de panneaux (1 et 1') porteurs chacun d'images de stéréogramme dont une inverse de l'autre placée côté miroir, par la déformation non permanente par cintrage des parties de panneaux (3 et 3') ne formant pas le panneau (6).
Cela permet à un observateur plaçant son regard de par et d'autre du miroir de choisir un angle d'ouverture approprié à sa vue lui donnant la bonne distance oeil-image pour une fusion stéréoscopique sans gênes ophtamiques.
Ce dispositif peut exister en diverses formes ou dimensions, qui petites sont destinées à l'édition de cartes postales ou de livre, qui grandes servent à l'édition de posters dont muraux privés ou destinés à diverses expositions publiques.

## Description

La présente invention concerne un dispositif pliant autogénérateur constant, lors de son déploiement, de plan bissecteur, par déformation non permanente d'une partie de celui-ci, pour vision stéréoscopique mono-miroir.

Pour restituer le relief à la vision humaine par des reproductions d'images on a eu recours depuis plus de cent cinquante ans à divers procédés que l'on a regroupés sous le nom de stéréoscopie.

La stéréoscopie a permis l'élaboration de trés nombreuses formes de stéréogrammes.

Un stéréogramme est l'ensemble de deux images données séparément à voir chacune à un oeil, correspondantes à ce que chaque oeil aurait vu dans la réalité, la séparation spatiale des images permettant au cerveau la fusion stéréoscopique et par là la sensation visuelle du relief.

La vision naturelle de stéréogrammes peut se faire en visions dites parallèles ou croisées mais ne sont possibles sans gènes ophtalmiques que par peu de personnes.

L'aide à la vision confortable de stéréogrammes se fait par des stéréoscopes, qui permettent la séparation spatiale des images, dont le plus simple est le stéréoscope à un seul miroir déjà décrit dans son principe en 1856 par Sir D. Brewster dans son ouvrage "The Stereoscope, its history,theory and construction" et repris de description en 1990 dans l'ouvrage Jac.G. Ferwerda "the world of 3-D:a practical guide to stéréo-photography ".

Ce type de stéréoscope exige alors qu'une des images du stéréogramme à observer soit l'inverse stéréoscopique de l'autre, l'image non inversée est observée par un oeil et l'image inversée par l'autre oeil par l'intermédiaire d'un miroir pouvant se situer indifférement vers l'oeil gauche ou droit mais toujours dans le plan bissecteur du stéréogramme, cet avant dernier servant de séparateur spatial des images.

Il est connu dans ce type de stéréoscope de devoir respecter la distance réelle de vision physiologique humaine minimum de chaque oeil, emmetrope ou corrigé, à l'image vue par lui directement ou indirectement par l'intermédiaire du miroir, qui est de trente trois centimètres en lecture mais peut être ramenée à vingt huit centimètres environ en cas de visualisation d'images.

Il est connu aussi dans ce type de stéréoscope d'observer les stéréogrammes présentés, en sus de la précédente exigence physiologique, sur un plan-dièdre inférieur de quelques degrés, et jusqu'à soixante degrés environ, au plan pour permettre d' éviter la gêne ophtalmique résultant:
- de la convergence importante de l'oeil placé côté miroir observant l'image inversée d'un stéréogramme plan,
- de la grande non perpendicularité de l'axe de vision de l'oeil à l'image non inversée d'un stéréogramme plan. Comme il est connu que l'angle de vision centrale humain est d' environ trente degrés et que l'image vue à la distance minimum de vision de vingt huit centimètres donne une image à vision privilégiée de théoriquement quinze centimètres de diamètre, cette possibilité d'observation de stéréogrammes sur un plan-dièdre, qui permet d'éviter la convergence de l'oeil côté miroir, permet aussi aux yeux leur mobilité circulaire sans gêne ophtalmique, et, corollairement d'observer des images allant bien au-delà du cercle de vision de prédilection et juqu'à trente centimètres de diamètre.

Géométriquement, et en sus de l'obligation du respect de distance physiologique cité plus avant, il est aussi connu que les formes et grandeurs nécessaires et suffisantes du miroir sont liées à l'écartement des images du stéréogramme à observer, même présentées sur un plan dièdre, et que la hauteur de celui-ci diminue de bas en haut quand 1' écart des images augmente.

Il est connu de réaliser des stéréoscopes à un seul miroir suivant les principes décrits par Brewster et entre autres dans les brevets DE-C-187 051 du 23 juillet 1909, GB-A-K27379 du 07 septembre 1911, FR-A-463 708 du 03 mars 1914, FR-A-581 914 du 08 décembre 1924, GB-A-505 602 du 08 juin 1939, FR-A-1 008 165 du 23 mai 1952, FR-A-1 030 143 du 09 juin 1953, FR-A-1 064 672 du 17 mai 1954, GB-A-784 919 du 16 octobre 1957, US-A- 2 842 027 du 08 juillet 1958, FR-A-1 173 710 du 02 mars 1959, BE 2 221 054 A du 11 mars 1960, GB-A-1 170 819 du 19 novembre 1969, US-A-3 888 564 du 10 juin 1975, GB-A-2 052 088 du 21 janvier 1981, WO-A-83 02 169 du 23 juin 1983, GB 2 131 969 A du 27 juin 1984, GB-A-2 221 054 du 24 janvier 1990, DE 295 05 516 U du 27 juillet 1995, FR 2 748 580 du 07 mai 1996, et GB 2 312 966 du 08 mai 1996.

On remarque à l'étude chronologique de ces brevets qu'ils sont le reflet des technologies de leurs époques tant pour leurs réalisations matérielles que des techniques de reproduction des images toujours plus performantes en qualités, quantités, grandeurs, diversités de supports et coûts.

Depuis une dizaine d'années l'avènement de l'électronique et de l'informatique a permis dans le traitement, directement ou indirectement,des images une profusion de productions d'images à vision non stéréoscopiques de toutes natures et dimensions, notamment sur support papier, et dans tous les domaines d'activité possibles.

La stéréovision a profité des technologies électronique et informatique notamment dans les sciences médicales, spatiales, ou dans l'art cinématographique mais n'a pas profité à la stéréovision grand public sur support "papier" faute d'un dispositif de vision extrêmement simple: pour sa fabrication, sa simplicité d'utilisation, sa rapidité d'adaptation à la vue de chacun, qui permet corollairement une utilisation prolongée sans fatigue ophtalmique.

C'est en s'inspirant du principe de Brewester sur le stéréoscope mono-miroir et des exigences géométriques de ce type de stéréoscope mais aussi des exigences physiologiques humaines que les inventeurs ont imaginé un dispositif d'une extrême simplicité pouvant remédier à ces inconvénients.

Le dispositif selon l'invention est notamment remarquable en ce qu'il comporte selon une première caractéristique deux panneaux, appelés à suivre panneaux images, reliés suivant une articulation leur permettant d'être à plat à zéro degré et de s'ouvrir jusqu'à cent quatre vingt degrés. Deux autres panneaux, appelés à suivre panneaux cintrables, sont reliés aux précédents par articulations équidistantes, de préférence parallèles mais de manière non obligatoire, à la précédente articulation en préservant la planéité des deux panneaux images. Ces panneaux cintrables sont reliés partiellement entre eux par des surfaces, délimitées sur chaque panneau par des lignes équidistantes, de préférence parallèles mais de manière non obligatoire, aux articulations les liant aux panneaux images et jusqu'à leurs extrémités supérieures, pour former un nouveau panneau plan appelé à suivre panneau optique.

Avantageusement, les matériaux constitutifs des divers panneaux sont choisis, pour leur rigidité et aussi pour leur capacité de déformation non permanente par cintrage.

On comprend que ce dispositif se plie et se déplie en gardant toujours le plan médian du panneau optique dans le plan bissecteur du plan-dièdre formé et cela grâce:
- à la rotation de l'ensemble autour des trois axes définis,
- à la déformation non permanente par cintrage des parties de panneaux non réunies pour former le panneau optique.
- à la rigidité et la planéité des panneaux images et du panneau optique.

Les parties libres des panneaux images sont destinées à recevoir chacune, sur toute ou partie de leurs surfaces, symétriquement à l'axe de liaison des dits panneaux, une des images de stéréogramme dont l'une est l'inverse de l'autre, l'image inversée se situant de préférence, mais de manière non obligatoire, à gauche.

Le panneau optique est destiné à recevoir par inclusion côté image inversée un miroir plan, avantageusement choisi d'épaisseur égale ou inférieure à l'épaisseur du matériau constitutif des panneaux cintrables, dimensionné et positionné en respectant les exigences physiologiques et géométriques bien connues décrites plus avant qui permettent, de préférence mais de manière non obligatoire, de couvrir visuellement par réflexion la totalité de la partie du panneau support de l'image inverse, qu'il soit ou non entièrement occupé par l'image, mais qui, au minimum, permette de couvrir par réflexion la totalité de l'image à observer ou prévue d' observer.

Ainsi on comprend qu'un observateur dépliant le dispositif et plaçant son regard de part et d'autre du panneau optique, le côté miroir entre l'oeil et l'aile du nez, puisse par plus ou moins grande ouverture trouver sa distance de vision oeil-image optimale gage d'une fusion stéréoscopique naturelle et non forcée et corollairement d'éviter la fatigue ophtalmique.

On remarque, en pliant ce dispositif que la distance minimum de vision de l'oeil à l'objet de vingt huit centimétres détermine sa dimension minimum de largeur qui sera de vingt huit centimètres plus la distance du premier axe d' articulation à un des seconds, alors que sa hauteur est libre de détermination en fonction des stéréogrammes choisis possibles d'observation.

Pour diminuer cette largeur mais garder la distance minimum de vision oeil-image, un mode de réalisation original est remarquable en ce qu'il permet au miroir de coulisser de bas en haut à volonté dans le panneau optique pour permettre à un observateur de le régler au minimum à la distance de vision oeil-image de vingt huit centimètres.

Dans un autre mode de réalisation, qui peut être associé ou non au mode qui vient d'être décrit, le dispositif permet, de part sa configuration, de comporter plusieurs couples de panneaux images; ces autres couples sont fixés par articulations rotatives à trois cent soixante degrés aux bords extérieurs, avantageusement choisis parallèles mais de manière non obligatoire aux articulations reliant les panneaux cintrables aux panneaux images, des premiers panneaux images afin de former un album ou un livre.

Selon un autre mode de réalisation les couples de panneaux décrits plus avant peuvent être entre couples et indifférement des parties de l'autre couple.

L'invention sera bien comprise et d'autres particularités apparaîtrons à la lecture de la description qui va suivre et qui se réfère aux dessins annexés dans lesquels les éléments communs ou semblables des divers modes de réalisations portent les mêmes références, ainsi:

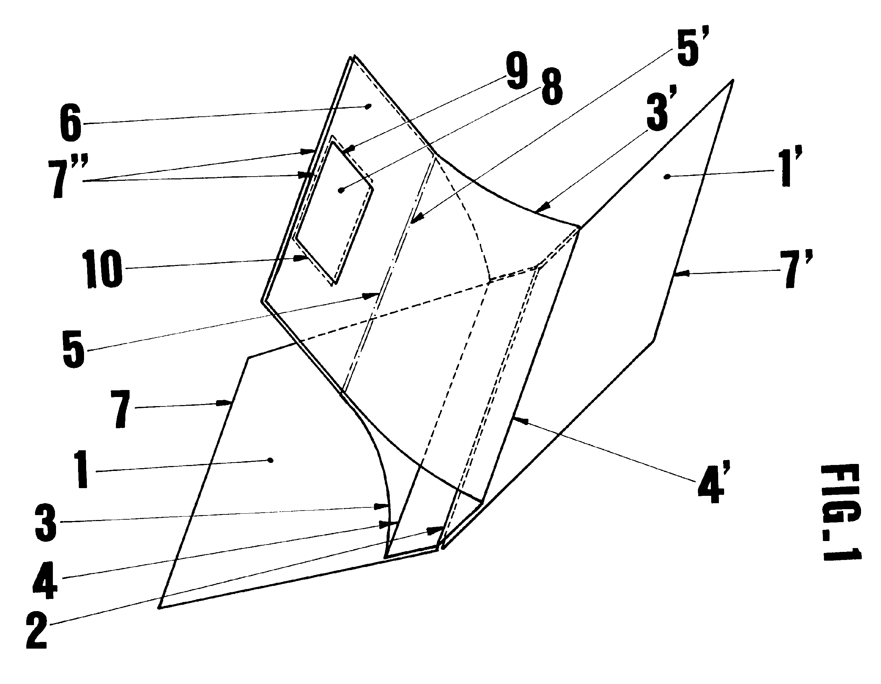

- la figure 1 représente le dispositif suivant l'invention,
- la figure 2 représente un mode de réalisation où le miroir peut être réglable par coulissement.
- la figure 3 représente un mode de réalisation permettant de visionner successivement une suite de stéréogrammes,
- la figure 4 représente un mode de réalisation d'une grande simplicité où les panneaux cintrables sont issus d' une partie des panneaux images

En référence à ces dessins, le dispositif comporte deux panneaux très rigides 1 et 1', dits panneaux images, par exemple en carton compact, pouvant pivoter autour d'une articulation 2 qui permet des manipulations allant de la fermeture complète des panneaux l'un sur l'autre à leur ouverture complète à cent quatre vingt degrés.

Deux autres panneaux 3 et 3', dits panneaux cintrables, de matériaux identiques comme du carton semi-rigide sont liés respectivement aux panneaux images 1 et 1', de manière à préserver les planéités de ces derniers lors de leurs manipulations d'ouverture et de fermeture, ces liaisons sont faites par des articulations 4 et 4' équidistantes de l'articulation 2, avantageusement parallèles mais de manière non obligatoire, à 5 centimètres environ de celle-ci.

Ces articulations 2, 4 et 4' peuvent se faire par exemple, le matériau choisi étant du carton, par le fait que les panneaux 3 et 3' n'en font en réalité qu'un seul avantageusement plié pour créer les dites articulations et permettre la fixation par exemple par collage des panneaux images 1 et 1' de manière à permettre leur ouverture de zéro à cent quatre vingt degrés.

Les parties de surfaces des panneaux images 1 et 1' comprises respectivement entre les articulations 4 et 4' et les bords extérieurs 7 et 7' sont destinées à recevoir indifférement d'un côté ou de l'autre, sur tout ou partie de leurs surfaces, et équidistantes de l'axe de rotation 2 chacune une des images d'un stéréogramme dont l'une est l'inverse de l' autre, imprimées en préalable au montage, ou collées après celui-ci, ou à présenter en appui contre les plis 4 et 4'.

Ces panneaux sont reliés entre eux, par exemple par collage, sur une surface délimitée par des lignes 5 et 5' équidistantes des axes d'articulations 4 et 4' jusqu'à leurs extrémités 7" pour former un panneau 6 de double épaisseur dit panneau optique.

La surface de ce panneau optique 6 sera déterminée pour être nécessaire et suffisante pour l'implantation d' un miroir 8 décrit ci-après en gardant la planéité du dit panneau et permettre de laisser les plus grandes surfaces possibles pour les panneaux cintrables 3 et 3'.

Ce miroir rigide 8 est inclus dans le panneau optique 6 de manière à ce que son plan réflecteur soit dans le plan médian du panneau côté image inversée, avantageusement choisi d'épaisseur au maximum égale à l'épaisseur du matériau constitutif des panneaux 3 et 3' il permet ainsi au dispositif d'être complètement plat un fois fermé.

Ce miroir est déterminé dimensionnellement en respectant les exigences géométriques optiques bien connues pour permettre:
- la réflexion d'au minimum la totalité de la surface du panneau image inversée auquel il est associé,
- sa fixation dans le panneau optique par exemple par collage ce qui implique un surdimensionnement optimum.

Ce miroir est aussi positionné dans le panneau optique 6 pour respecter la distance physiologique minimum de vision oeil-image de vingt huit centimètres.

Pour permettre l'inclusion de ce miroir 8 dans le panneau optique 6, on pratique avant sa réunification et dans la partie panneau côté image inversée une lumière 9 aux dimensions déterminées optimum du miroir, dans la partie du panneau opposé on pratique une lumière 10 de dimensions supérieure à la lumière 9 par exemple de quelques millimètres sur tout le pourtour afin de créer une surface pour le collage du dit miroir 8 après assemblage du panneau optique 6.

C'est ainsi qu'un tel dispositif permet:
- par la planéité des panneaux images 1 et 1',
- par la planéité du panneau optique 6 et son positionnement automatique dans le plan bissecteur du plan-dièdre formé par les panneaux images 1 et 1' quelque soit l' ouverture de ce dernier,
- par la possibilité de déformation identique par cintrage et non permanente des panneaux cintrables 3 et 3',
- par des dimensionnements respectueux des exigences géométriques et physiologiques connues de la vision stéréoscopique mono-miroir,
à un observateur plaçant son regard de part et d'autre du panneau optique et de préférence entre l'oeil côté miroir et l'aile du nez de maneuvrer le dispositif pour trouver sa distance oeil-image de prédilection permettant une fusion stéréoscopique sans gênes ophtalmiques.

Dans un tel dispositif seule l'obligation de respecter la distance physiologique oeil-image détermine sa dimension en largeur,qui est de vingt huit centimètres, augmentée, de deux centimètres destinés à compenser la diminution de cette distance de vision physiologique considérée le système ouvert à cent quatre vingt degrés et due à l'inclinaison du panneau optique 6 et à la déformation des panneaux 3 et 3', et augmentée de la distance de l'axe de rotation 2 à un des axes 4 ou 4',avantageusement mais de manière non obligatoire, d'environ cinq centimètres,soit en fait environ trente cinq centimètres.

On constate que dans le respect des exigences géométriques et physiologiques connues et définies plus avant, la hauteur du dispositif est à la discrétion de son réalisateur en fonction des dimensions des stéréogrammes souhaités à présenter.

De préférence le dispositif peut être déterminé dimensionnellement pour que les extrémités 7 et 7' des panneaux images coïncident avec les extrémités 7" du panneau optique, pour donner un ensemble qui fermé est esthétique mais assure la protection du miroir 8 et ainsi donner des parties utilisables à visionner des panneaux images 1 et 1' dont la largeur sera de trente centimètres. Mais on comprend que cela n'est pas obligatoire pour visionner par exemple des images de type panoramique en hauteur qui accolées aux articulations 4 et 4' permettent des panneaux images de largeurs moindres.

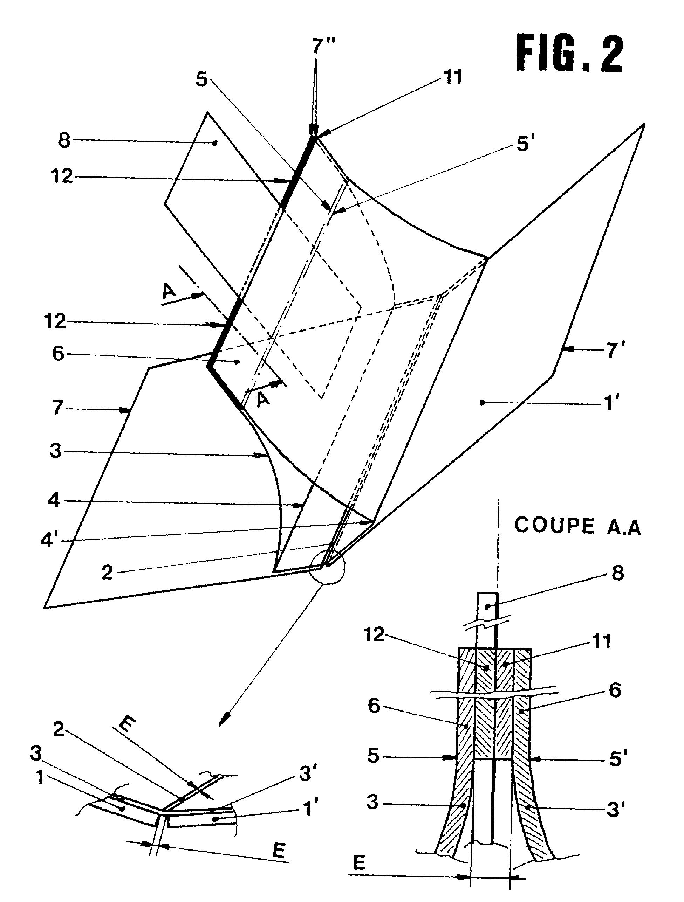

C'est ainsi que pour avantageusement créer un ensemble fermé à plat de largeur inférieure à trente cinq centimètres mais permettant de garder la distance minimum physiologique de vingt huit centimètres, un mode de réalisation original présenté à la figure 2 consiste à faire coulisser le miroir 8 dans le panneau optique 6.

Pour ce faire, avant réunification des panneaux cintrables 3 et 3' pour former le panneau optique 6, une cale 11, de la surface du futur panneau optique et de l'épaisseur du miroir 8 choisi, est collée sur la face intérieure du panneau 3 ou 3' situé côté image inversée et sur toute la surface de réunification, mais aussi, deux autres cales 12, d' épaisseur identique à celle du miroir 8, sont collées sur la face intérieure du panneau 3 ou 3' située côté image non inversée, parallèlement entre elles pour laisser un espace nécessaire et suffisant au miroir 8 déterminé nécessaire et suffisant par les exigences géométriques des stéréogrammes à observer, et lui permettre de coulisser de bas en haut. Ces cales 12 occupent bien sûr toutes les surfaces du panneau optique 6 en formation non nécessaires à l'évolution du miroir 8.

Le miroir 8 est choisi de la plus faible épaisseur possible lui permettant de garder toute sa planéité; de forme rectangulaire allongée et de largeur légèrement inférieure à la fente de coulissement il est inséré côté réfléchissant du côté image inversée, il est aussi déterminé dimensionnellement géométriquement pour que sa partie émergeante du panneau optique 6 soit au maximum nécessaire et suffisante pour visualiser par réflexion la totalité de la partie du panneau images qui lui est associée ou au minimum pour visualiser le ou les stéréogrammes à voir ou prévus de voir.

C'est aussi pour ce faire dans ce mode de réalisation que l'ensemble panneaux cintrables-panneau optique-miroir est déterminé dimensionnellement et mécaniquement pour garder toutes les qualités propres au dispositif et que 1' articulation 2 est formée comme l'indique le détail de la figure 2 de deux lignes de pliage espacées de la valeur de l'épaisseur E des cales 11 et 12 réunies, mais aussi que les panneaux images 1 et 1' soient reliés par collage à 3et 3' en laissant entre eux et à plat le même écartement E comme représenté dans le détail de la figure 2.

Ce mode de réalisation permet au dispositif d'avoir avantageusement une largeur minimum de vingt centimètres, le miroir 8 a alors la même largeur et s'insère parfaitement dans le dispositif complètement plié et à plat; les hauteurs du dispositif et par extension du miroir sont laissées à l'appréciation du réalisateur en fonction des stéréogrammes à qu'il doit présenter.

Selon une variante non illustrée le dispositif peut comporter en hauteur plusieurs stéréogrammes auxquels peuvent être associés un ou plusieurs miroirs correspondants.

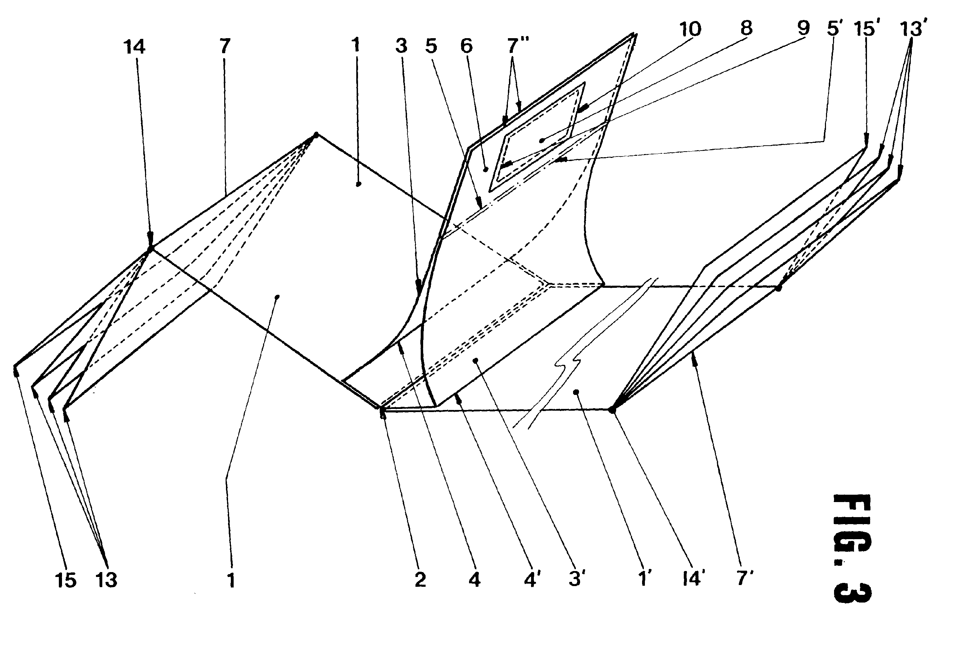

La figure 3 décrit un autre mode de réalisation du dispositif, qui peut être associé ou non aux modes décrits précédement, permettant de visionner une succession de stéréogrammes.

Dans ce mode de réalisation, illustré par la figure 3, les parties des panneaux 1 et 1' destinées à l'implantation des images peuvent recevoir d' autres panneaux images 13 et 13' de préférence de mêmes dimensions que ces parties de panneaux 1 et 1' et avantageusement en papier. Ces panneaux 13 et 13' vont par paires et les images inverses déjà imprimées ou collées ou qu'ils doivent recevoir, sont bien sûr toutes disposées du côté du miroir et les images non inversées du côté opposé. Ces panneaux 13 et 13' sont fixés par des articulations 14 et 14', par exemple de type annulaires, aux extrémités 7 et 7' des panneaux optiques 1 et 1' pour pouvoir pivoter à trois cent soixante degrés.
La première paire de panneaux 15 et 15', de dimensions de préférence identiques aux paires 13 et 13', est constituée d' un matériau très rigide comme par exemple du carton compact identique à celui constituant les panneaux images 1 et 1'. Le dispositif ainsi constitué se ferme à plat, les panneaux 13 et 13' se rabattent côté extérieurs des panneaux 1 et 1' et les panneaux 15 et 15' se rabattent sur les panneaux 13 et 13' pour former les couvertures d'un ensemble plat qui en se dépliant sur un support comme une table, possède pour un observateur tous les avantages inhérant au dispositif, dont le confort visuel, mais permet de visionner des suites de stéréogrammes pouvant être importantes en nombre.

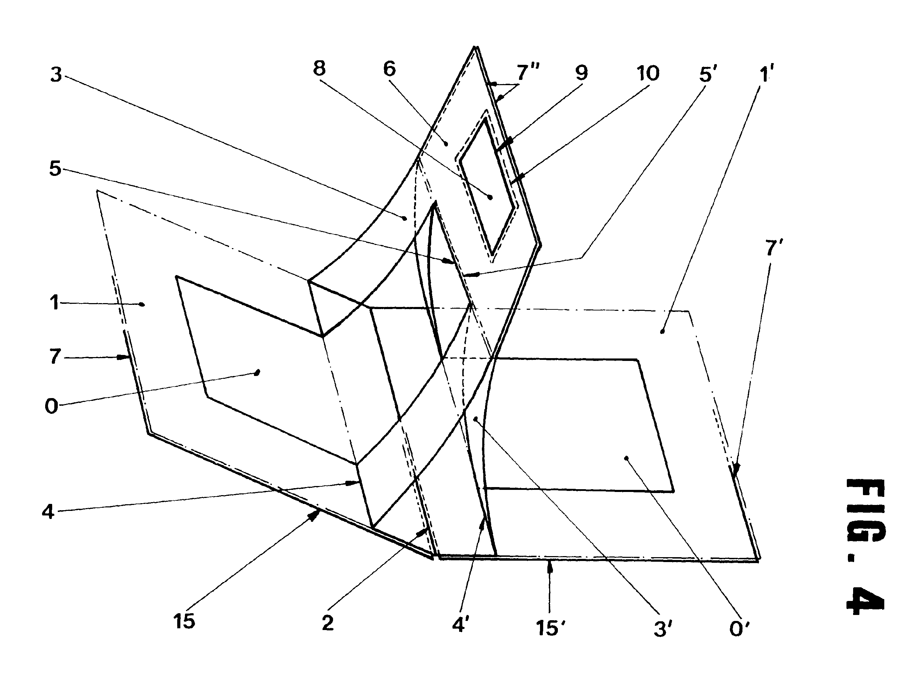

Un autre mode de réalisation, illustré sur la figure 4 est très simple à réaliser en respectant les exigences géométriques et physiologiques connues pour ce type de visionnement de stéréogrammes. Sa largeur à plat est d'environ trente trois centimètres et sa hauteur laissée à la volonté du constructeur en fonction des stéréogrammes à présenter.

Des panneaux images primitifs 1 et 1',par exemple en carton rigide mais possible de déformation non permanente par cintrage, sont en fait un seul panneau articulé suivant une ligne de pliage 2 équidistante des bords extérieurs primitifs 7"; des panneaux cintrables 3 et 3' sont issus par découpes extérieures des panneaux primitifs 1 et 1' en laissant des panneaux images 0 et 0'.

Ces panneaux 3 et 3' sont articulés suivant des articulations 4 et 4' faites par des lignes de pliage équidistantes, de préférence parallèles à cinq centimètres, de l'articulation 2, mais interrompues pour garder l'intégrité de planéité des panneaux images 1 et 1'.

Ces panneaux 3 et 3' sont reliés par exemple par collage suivant des lignes 5 et 5' équidistantes, de préférence parallèles, aux articulations 4 et 4' jusqu'à leurs extrémités 7" équidistantes, et de préférence parallèles, de l'articulation 2, pour former un panneau optique 6 de dimensions nécessaires et suffisantes pour inclure côté image inverse un miroir plan 8 placé côté image inversée et :
- dimensionné pour respecter les exigences géométriques de vision par réflexion de l'image inversée d'un stéréogrammes positionné sur 1 ou 1',
- positionné pour respecter la distance physiologique minimum de vision de vingt huit centimètres
- inclus dans le panneau optique suivant la méthode décrite plus avant, par les découpes 9 et 10, et illustrée par la coupe A.A de la figure 2.

Avantageusement, mais de manière non obligatoire, des panneaux 15 et 15', de la dimension des panneaux primitifs, peuvent être rapportés par collage sur 0 et 0'pour servir de couvertures et de protection du miroir.

Selon une variante non illustrée, un dispositif peut se réaliser en ce que les panneaux cintrables 3 et 3' sont obtenus par la découpe intérieure et non pas extérieure comme précédement de 1 et 1', donnant ainsi des parties 0 et 0' vides destinées à visionner des images translucides ou provenant de supports divers tels des écrans vidéo.
Le même type de panneaux 15 et 15' peuvent s'implanter sur ce mode de réalisation.

Il est a noter que de nombreuses modifications ou variantes peuvent être apportées sans sortir du cadre de l'invention notamment dans la forme des divers panneaux ou leurs dimensions, comme par exemple les diverses extrémités 7,7' et 7" qui sont de préférence alignées quand le dispositif est à plat, peuvent ne pas 1' être.

Le dispositif suivant l'invention est notamment destiné, quand il reprend la distance minimum de vision et une faible hauteur, à l'édition de cartes postales stéréoscopiques ou de livres comportant en tout ou partie des stéréogrammes ou d'album pour stéréogrammes.

De plus grandes hauteurs, mais de largeurs plus faibles avec un miroir réglable, il est plutôt destiné à la réalisation de livres ou d'albums.

Dans de grandes dimensions le dispositif est destiné à l'édition de posters, dont muraux, à destinations privées ou publiques telles diverses expositions commerciales ou muséographiques.

## Revendications

1. Dispositif pliant, autogénèrateur constant, lors de son déploiement, de plan bissecteur, par déformation non permanente d'une partie de celui-ci, pour visionnement mono-miroir de stéréogrammes, **caractérisé en ce qu'**il comporte deux panneaux 1 et 1' qui pivotent autour d'une articulation 2 auxquels sont reliés des panneaux 3 et 3' par des articulations 4 et 4' garantes de la planéité des panneaux 1 et 1', équidistantes de l'articulation 2 ces panneaux 3 et 3' étant eux-mêmes reliès à leurs extrémités opposées aux articulations 4 et 4' par des surfaces partielles délimitées par des lignes 5 et 5', équidistantes des articulations 4 et 4', et par leurs extrémités 7", pour former un panneau plan 6.

2. Dispositif selon la revendication 1- **caractérisé en ce que** les panneaux 1 et 1' recoivent, symétriques à l'articulation 2 sur tout ou partie de leurs surfaces comprises entre leurs extrémités 7 et 7' et leurs axes de rotations 4 et 4' et indifférement, chacunes une des images d'un stéréogramme dont l'une est l'inverse de l'autre par impression préalable à l'assemblage du dispositif, par collage ou par positionnement après celui-ci.

3. Dispositif selon la revendication 1- **caractérisé en ce que** le panneau 6 reçoive par inclusion, grâce à des réservations 9 et 10 dans les parties de 3 et 3' le formant, un miroir plan 8, d' épaisseur égale ou inférieure à la moitié de l'épaisseur du panneau , dont la face réfléchissante se trouve sur le plan médian du dit panneau et tournée face au panneau recevant 1' image inversée du stéréogramme.

4. Dispositif selon la revendication 3- **caractérisé en ce que** le miroir 8 coulisse dans le panneau 6 grâce à un espace nécessaire et suffisant créé dans ce dernier par 1' adjonction de cales 11 et 12 entre les deux parties de panneaux 3 et 3' qui forment celui-ci.

5. Dispositif selon la revendication 1- et la revendication 4 **caractérisé en ce que** l'articulation 2 soit dimensionnée pour reprendre la surépaisseur représentée par les cales 11 et 12.

6. Dispositif selon l'une des quelconques revendications précédentes **caractérisé en ce qu'**il comporte des panneaux 13,13',15 et 15' destinés à recevoir d'autres stéréogrammes, articulés à trois cent soixante degrés autour des extrémités 7 et 7' des panneaux 1 et 1'.

7. Dispositif selon la revendication 6- **caractérisé en ce que** les panneaux 15 et 15' soient des couvertures.

8. Dispositif selon la revendication 1- **caractérisé en ce que** les panneaux 3 et 3' soient une partie des panneaux 1 et 1' qui restent pleins.

9. Dispositif selon la revendication 1- **caractérisé en ce que** les panneaux 3 et 3' soient une partie des panneaux 1 et 1' qui sont en partie vides de matière.
